# EUROPEAN PATENT APPLICATION

(11) **EP 4 723 797 A1**
(43) Date of publication of application: **08.04.2026**
(21) Application number: 23939742.5
(22) Date of filing: 02.06.2023
(51) Int. Cl.: H04W 76/15, H04W 84/12

(54) **TERMINAL DEVICE, SHARING ACCESS POINT, SHARED ACCESS POINT, AND COMMUNICATION METHOD**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ABEYSEKERA, Hirantha, Musashino-shi, Tokyo 180-8585 (JP); OTANI, Hanae, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/020704
(87) International publication number: WO 2024/247271

(57) **Abstract**

A terminal apparatus is a terminal apparatus in a communication system including a sharing access point, a plurality of shared access points, and a terminal apparatus. The apparatus includes a first wireless signal processing unit and a management unit. The first wireless signal processing unit processes a wireless signal for transmitting and receiving the wireless signal using each of a plurality of radio units. The management unit manages a connection destination of the first wireless signal processing unit. The first wireless signal processing unit is allocated with a plurality of different first identifiers respectively corresponding to the plurality of radio units. The management unit switches the first identifier according to a second identifier allocated to a second wireless signal processing unit that transmits and receives the wireless signal to and from the first wireless signal processing unit among one or more second wireless signal processing units of each of the shared access points, and controls a connection destination of the radio unit.

## Description

### Technical Field

An embodiment relates to a terminal apparatus, a sharing access point, a shared access point, and a communication method.

### Background Art

In the IEEE 802.11be standard, a multi-link operation of performing frame transmission using a plurality of transmission paths having different frequency channels is scheduled to be specified. Further, in the IEEE 802.11be standard, an enhanced multi-link single radio (EMLSR) mode is scheduled to be defined as one of the modes of the multi-link operation. A terminal in the EMLSR mode can establish a plurality of logical wireless links with an access point (AP) by having a plurality of antennas. On the other hand, since the terminal in the EMLSR mode has only one access control function and one signal processing function, transmission and reception cannot be independently controlled in each wireless link.

### Citation List

### Non Patent Literature

Non Patent Literature 1: IEEE802.11be D3.0,"35.3 Multi-link operation",p479-p586,January 2023

### Summary of Invention

### Technical Problem

In the next leading standard of IEEE 802.11be, the multi-AP function is scheduled to be specified. In the multi-AP function, frame transmission is performed by cooperation and coordination of a plurality of access points. Here, it is desired that the wireless terminal in the EMLSR mode can also use the multi-AP function.

The present embodiment has been made in view of the above circumstances, and an object thereof is to provide a wireless communication environment in which a multi-AP function can be used even in a terminal of the EMLSR mode.

### Solution to Problem

A terminal device in one aspect is a terminal device in a communication system including a sharing access point, a plurality of shared access points, and a terminal apparatus. The terminal apparatus includes a first wireless signal processing unit and a management unit. The first wireless signal processing unit processes a wireless signal for transmitting and receiving the wireless signal using each of a plurality of radio units. The management unit manages a connection destination of the first wireless signal processing unit. The first wireless signal processing unit is allocated with a plurality of different first identifiers respectively corresponding to the plurality of radio units. The management unit switches the first identifier according to a second identifier allocated to a second wireless signal processing unit that transmits and receives the wireless signal to and from the first wireless signal processing unit among one or more second wireless signal processing units of each of the shared access points, and controls a connection destination of the radio unit.

### Advantageous Effects of Invention

According to the embodiment, it is possible to provide a wireless communication environment in which a multi-AP function can be used even in a terminal in an EMLSR mode.

### Brief Description of Drawings

Fig. 1 is a block diagram illustrating an example of a configuration of a communication system according to an embodiment.
Fig. 2 is a block diagram illustrating an example of a hardware configuration of a sharing AP according to the embodiment.
Fig. 3 is a block diagram illustrating an example of a hardware configuration of a shared AP according to the embodiment.
Fig. 4 is a block diagram illustrating an example of a hardware configuration of a terminal according to the embodiment.
Fig. 5 is a block diagram illustrating an example of a functional configuration of the sharing AP according to the embodiment.
Fig. 6 is a table illustrating an example of a data structure of terminal management information stored in the sharing AP according to the embodiment.
Fig. 7 is a diagram illustrating an example of an association notification generated in the sharing AP.
Fig. 8 is a block diagram illustrating an example of a functional configuration of the shared AP according to the embodiment.
Fig. 9 is a diagram illustrating an example of a beacon frame generated in the shared AP.
Fig. 10 is a table illustrating an example of a data structure of link management information stored in the shared AP according to the embodiment.
Fig. 11 is a block diagram illustrating an example of a functional configuration of the terminal according to the embodiment.
Fig. 12 is a table illustrating an example of a data structure of link management information stored in the terminal according to the embodiment.
Fig. 13 is a table illustrating an example of a data structure of terminal management information stored in the terminal according to the embodiment.
Fig. 14 is a sequence diagram illustrating an example of processing of communication based on multi-AP connection in the communication system according to the embodiment.
Fig. 15 is a flowchart illustrating an example of determination processing subsequent to association processing.

### Description of Embodiments

Hereinafter, an embodiment will be described with reference to the drawings. Note that in the following description, components having the same functions and configurations will be denoted by common reference signs.

### 1. Embodiment

### 1.1 Configuration

### 1.1.1 Communication System

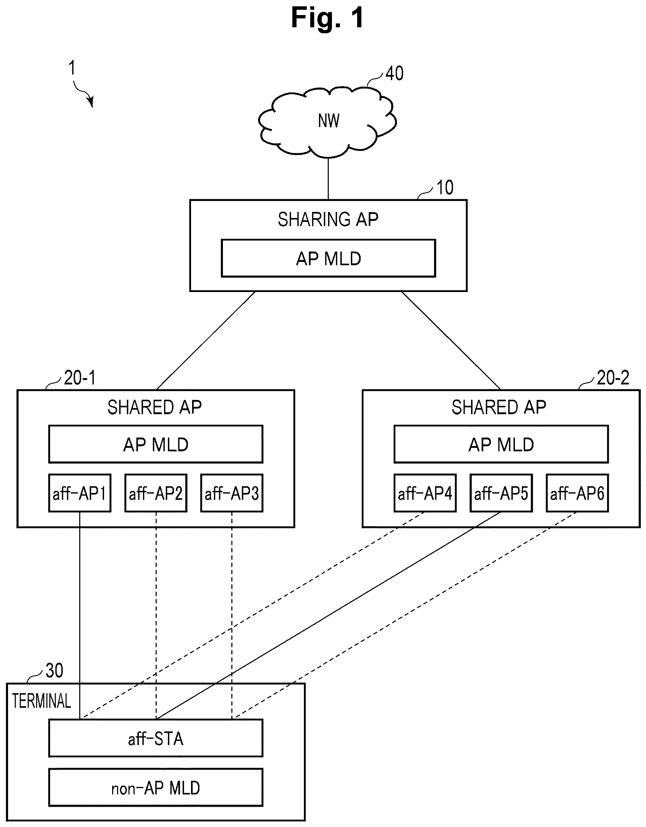

Fig. 1 is a block diagram illustrating an example of a configuration of a communication system according to an embodiment. As illustrated in Fig. 1, a communication system 1 includes a sharing AP 10, shared APs 20-1 and 20-2, and a terminal 30. The sharing AP 10 is connected to a network 40.

The sharing AP 10 is, for example, an access point (AP) of a wireless LAN. The sharing AP 10 is configured to perform wired communication or wireless communication with a server (not illustrated) on the network 40. The sharing AP 10 is configured to perform wired communication or wireless communication with each of the shared APs 20-1 and 20-2. The sharing AP 10 includes an AP MLD. The AP MLD is a multi-link device (MLD) of a sharing AP that manages a state of a wireless link with terminal 30 in communication system 1. Here, in Fig. 1, only one sharing AP 10 is illustrated. The communication system 1 may include a plurality of sharing APs 10. In this case, each of the sharing APs 10 individually includes an AP MLD.

Each of the shared APs 20-1 and 20-2 is, for example, an access point (AP) of the wireless LAN. The shared APs 20-1 and 20-2 are installed at positions physically separated from one another. Communicable areas of the shared APs 20-1 and 20-2 may have an overlapping area. The shared AP 20-1 includes an AP MLD and affiliated APs (aff-APs) 1, 2, and 3. The shared AP 20-2 includes an AP MLD and affiliated APs (aff-APs) 4, 5, and 6. The AP MLD is an MLD of a shared AP that manages a state of a wireless link with a terminal 30. The affiliated APs 1, 2, 3, 4, 5, and 6 are signal processing functions that transmit and receive wireless signals to and from an affiliated STA of the terminal 30 using a wireless link established with the affiliated STA of the terminal 30. Each of the shared APs 20-1 and 20-2 includes one or more, and in Fig. 1, three affiliated APs.

The terminal 30 is a wireless terminal such as a smartphone and a personal computer (PC). The terminal 30 is a wireless terminal in an enhanced multi-link single radio (EMLSR) mode which is one of multi-link operations. That is, the terminal 30 includes a non-AP MLD and one affiliated STA (aff-STA). The non-AP MLD is the MLD of the terminal 30 that manages the state of the link between each of the shared APs 20-1 and 20-2 and the subordinate affiliated STA. The non-AP MLD also performs processing for establishing a multi-link set with the sharing AP 10. The multi-link set refers to a plurality of wireless links formed between the sharing AP 10 and the terminal 30 via the shared APs 20-1 and 20-2. The affiliated STA is a signal processing function that transmits and receives wireless signals to and from the affiliated APs of the shared APs 20-1 and 20-2 using a wireless link established with the affiliated APs of the shared APs 20-1 and 20-2. Each of the shared APs 20-1 and 20-2 includes one or more, and in Fig. 1, three affiliated APs.

In the EMLSR mode, an affiliated STA may establish two or more wireless links with an affiliated AP. However, in the EMLSR mode, an affiliated STA cannot independently transmit and receive a wireless signal on each of two or more wireless links.

The sharing AP 10, the shared APs 20-1 and 20-2, and the terminal 30 have, for example, a wireless communication function based on an open systems interconnection (OSI) reference model. In the OSI reference model, the wireless communication function is divided into seven layers (a first layer: a physical layer, a second layer: a data link layer, a third layer: a network layer, a fourth layer: a transport layer, a fifth layer: a session layer, a sixth layer: a presentation layer, and a seventh layer: an application layer). The data link layer includes a logical link control (LLC) sublayer and a media access control (MAC) sublayer.

In the embodiment, multi-AP connection is implemented by using a wireless link that is comprehensively established between the shared AP 20-1 and the terminal 30 and between the shared AP 20-2 and the terminal 30 by signaling between the sharing AP 10 and the terminal 30. In the example of Fig. 1, between the AP MLD of the sharing AP 10 and the non-AP MLD of the terminal 30, a wireless link via the affiliated AP 1 of the shared AP 20-1 and the affiliated STA of the terminal 30, a wireless link via the affiliated AP 2 of the shared AP 20-1 and the affiliated STA of the terminal 30, a wireless link via the affiliated AP 3 of the shared AP 20-1 and the affiliated STA of the terminal 30, a wireless link via the affiliated AP 4 of the shared AP 20-2 and the affiliated STA of the terminal 30, a wireless link via the affiliated AP 5 of the shared AP 20-2 and the affiliated STA of the terminal 30, a wireless link via the affiliated AP 6 of the shared AP 20-2 and the affiliated STA of the terminal 30 are established.

Here, data exchange using the wireless link via the affiliated AP 1 of the shared AP 20-1 and the affiliated STA of the terminal 30, the wireless link via the affiliated AP 2 of the shared AP 20-1 and the affiliated STA of the terminal 30, and the wireless link via the affiliated AP 3 of the shared AP 20-1 and the affiliated STA of the terminal 30 is performed using a pair of different antennas provided in each of the shared AP 20-1 and the terminal 30. Similarly, data exchange using the wireless link via the affiliated AP 4 of the shared AP 20-2 and the affiliated STA of the terminal 30, the wireless link via the affiliated AP 5 of the shared AP 20-2 and the affiliated STA of the terminal 30, and the wireless link via the affiliated AP 6 of the shared AP 20-2 and the affiliated STA of the terminal 30 is also performed using a pair of different antennas provided in each of the shared AP 20-2 and the terminal 30.

In the embodiment, a plurality of identifiers associated with identifiers of the respective antennas provided in the terminal 30 is allocated to the affiliated STA of the terminal 30. Respective wireless links using different antennas may be identified on the basis of the plurality of identifiers of the affiliated STAs.

At the time of data transmission from the sharing AP 10 to the terminal 30, a wireless link used for data transmission to the terminal 30 is designated by the shared AP 20-1 or the shared AP 20-2. The wireless link is designated using, for example, an initial control frame. An example of the initial control frame may be a Multi-User Request to Send (MU-RTS) trigger frame.

Further, communication between each of the shared APs 20-1 and 20-2, and the terminal 30 is compliant with, for example, the IEEE 802.11 standard. Note that the shared APs 20-1 and 20-2 have configurations equivalent to one another. Hereinafter, the shared APs 20-1 and 20-2 may be described as shared AP(s) 20 unless otherwise especially distinguished. Further, in the following description, the identifier of the sharing AP 10 is assumed as a sharing AP #1, the identifier of the shared AP 20-1 is assumed as a shared AP #1, the identifiers of the affiliated APs 1, 2, and 3 of the shared AP 20-1 are assumed as affiliated APs #1, #2, and #3, respectively, the identifier of the shared AP 20-2 is assumed as a shared AP #2, and the identifiers of the affiliated APs 4, 5, and 6 of the shared AP 20-2 are assumed as affiliated APs #4, #5, and #6, respectively. Furthermore, in the following description, assuming that the terminal 30 includes three antennas, identifiers of the affiliated STAs associated with the respective antennas are assumed as affiliated STAs #1, #2, and #3.

### 1.1.2 Hardware Configuration

Next, hardware configurations of the access point and the terminal in the communication system according to the embodiment will be described.

### 1.1.2.1 Hardware Configuration of Sharing AP

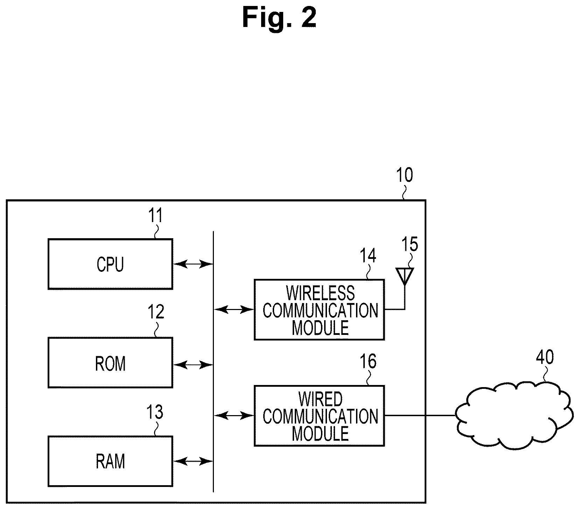

Fig. 2 is a block diagram illustrating an example of a hardware configuration of the sharing AP according to the embodiment. As illustrated in Fig. 2, the sharing AP 10 includes, for example, a central processing unit (CPU) 11, a read only memory (ROM) 12, a random access memory (RAM) 13, a wireless communication module 14, a wireless (RF) unit 15, and a wired communication module 16. Here, the sharing AP 10 in Fig. 2 is configured to wirelessly communicate with the shared APs 20-1 and 20-2. When the sharing AP 10 is configured to perform wired communication with the shared APs 20-1 and 20-2, the sharing AP 10 may not include the wireless communication module 14 and the RF unit 15.

The CPU 11 is a processing circuit that controls the entire operation of the sharing AP 10. The ROM 12 is a nonvolatile semiconductor memory, for example. The ROM 12 stores a program for controlling the sharing AP 10, and data. The RAM 13 is, for example, a volatile semiconductor memory. The RAM 13 is used as a working area of the CPU 11. The wireless communication module 14 is a circuit that performs signal processing for transmitting and receiving data by a wireless signal. The wireless communication module 14 is connected to the RF unit 15. The RF unit 15 is a wireless interface for transmitting and receiving wireless signals. The RF unit 15 includes, for example, an antenna. The wired communication module 16 is a circuit that performs signal processing for transmitting and receiving data by a wired signal. The wired communication module 16 can be connected to the network 40.

### 1.1.2.2 Hardware Configuration of Shared AP

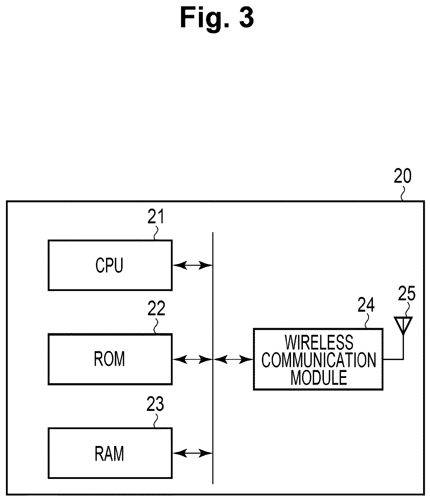

Fig. 3 is a block diagram illustrating an example of a hardware configuration of the shared AP according to the embodiment. As illustrated in Fig. 3, the shared AP 20 includes, for example, a CPU 21, a ROM 22, a RAM 23, a wireless communication module 24, and a radio (RF) unit 25. In the case where the shared AP 20 is configured for wired communication with the sharing AP 10, the shared AP 20 may include a wired communication module.

The CPU 21 is a processing circuit that controls an entire operation of the shared AP 20. The ROM 22 is a nonvolatile semiconductor memory, for example. The ROM 22 stores a program for controlling the shared AP 20, and data. The RAM 23 is, for example, a volatile semiconductor memory. The RAM 23 is used as a working area of the CPU 21. The wireless communication module 24 is a circuit that performs signal processing for transmitting and receiving data by a wireless signal. The wireless communication module 24 is connected to the RF unit 25. The RF unit 25 is a wireless interface for transmitting and receiving wireless signals. The RF unit 25 includes, for example, an antenna. The wireless communication module 24 can be connected to the sharing AP 10 and the terminal 30.

### 1.1.2.3 Hardware Configuration of Terminal

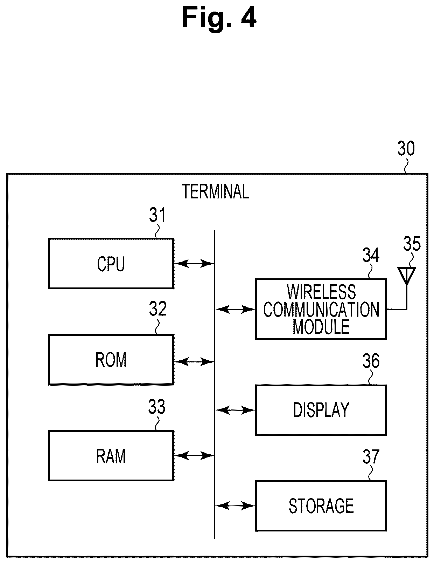

Fig. 4 is a block diagram illustrating an example of a hardware configuration of the terminal according to the embodiment. As illustrated in Fig. 4, the terminal 30 includes, for example, a CPU 31, a ROM 32, a RAM 33, a wireless communication module 34, a radio (RF) unit 35, a display 36, and a storage 37.

The CPU 31 is a processing circuit that controls an entire operation of the terminal 30. The ROM 32 is a nonvolatile semiconductor memory, for example. The ROM 32 stores a program for controlling the terminal 30, and data. The RAM 33 is, for example, a volatile semiconductor memory. The RAM 33 is used as a working area of the CPU 31. The wireless communication module 34 is a circuit used to perform signal processing for transmitting and receiving data by a wireless signal. The wireless communication module 34 is connected to the RF unit 35. The RF unit 35 is a wireless interface for transmitting and receiving wireless signals. The RF unit 35 includes, for example, an antenna and a listening unit. The display 36 is, for example, a liquid crystal display (LCD) or an electro luminescence (EL) display. The display 36 displays a graphical user interface (GUI) corresponding to application software, or the like. The storage 37 is a nonvolatile storage device. The storage 37 stores system software of the terminal 30, and the like.

### 1.1.3 Functional Configuration

Next, functional configurations of the access point and the terminal in the communication system according to the embodiment will be described.

### 1.1.3.1 Functional Configuration of Sharing AP

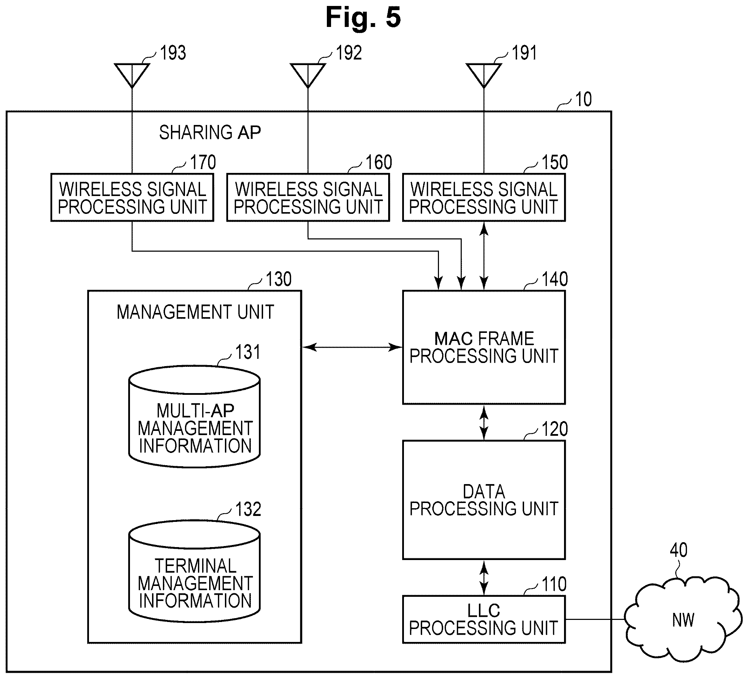

Fig. 5 is a block diagram illustrating an example of a functional configuration of the sharing AP according to the embodiment. The sharing AP 10 includes an LLC processing unit 110, a data processing unit 120, a management unit 130, a MAC frame processing unit 140, wireless signal processing units 150, 160, and 170, and antennas 191, 192, and 193. The LLC processing unit 110 is a functional block that executes processing corresponding to the LLC sublayer of the second layer and the third layer to the seventh layer. The data processing unit 120 and the management unit 130 are functional blocks that execute processing corresponding to the MAC upper layer that is a part of the MAC sublayer of the second layer. The MAC frame processing unit 140 and the wireless signal processing units 150, 160, and 170 are functional blocks that execute processing corresponding to the lower order of the MAC, which is a part of the second MAC sublayer, and processing corresponding to the first layer. Here, the data processing unit 120 and the management unit 130 correspond to the AP MLD of the sharing AP 10.

The LLC processing unit 110 adds, for example, a destination service access point (DSAP) header, a source service access point (SSAP) header, and the like to the data received from the network 40 to generate an LLC packet. Then, the LLC processing unit 110 inputs the generated LLC packet to the data processing unit 120. In addition, the LLC processing unit 110 extracts data from the LLC packet input from the data processing unit 120. Then, the LLC processing unit 110 transmits the extracted data to the network 40.

The data processing unit 120 performs preparation processing for generating a MAC frame such as aggregation on the LLC packet input from the LLC processing unit 110. Then, the data processing unit 120 inputs the processed data to the MAC frame processing unit 140. Further, the data processing unit 120 extracts the LLC packet by performing deaggregation or the like on the data input from the MAC frame processing unit 140. Then, the data processing unit 120 inputs the extracted LLC packet to the LLC processing unit 110.

The management unit 130 controls establishment of a logical wireless connection (wireless link) between the sharing AP 10 and the non-AP MLD of the terminal 30. For example, the management unit 130 performs multi-AP association processing in response to a multi-AP association request from the terminal 30. The multi-AP association processing in the embodiment is association processing for establishing a comprehensive wireless link between an affiliated AP of the shared APs 20-1 and 20-2 and an affiliated STA of the terminal 30 constituting the communication system 1. In the multi-AP association processing, the management unit 130 generates, for example, data for a beacon frame or generates an association notification or the like.

For example, in a case where the terminal 30 includes three antennas in Fig. 1, association processing for establishing each of the wireless link via the affiliated AP 1 of the shared AP 20-1 and the affiliated STA, the wireless link via the affiliated AP 2 of the shared AP 20-1 and the affiliated STA, the wireless link via the affiliated AP 3 of the shared AP 20-1 and the affiliated STA, the wireless link via the affiliated AP 4 of the shared AP 20-2 and the affiliated STA, the wireless link via the affiliated AP 5 of the shared AP 20-2 and the affiliated STA, and the wireless link via the affiliated AP 6 of the shared AP 20-2 and the affiliated STA may be performed.

Further, the management unit 130 performs control so that instantaneous interruption does not occur in physical wireless connection (data exchange) between the sharing AP 10 and the terminal 30 in the multi-AP connection. For example, the management unit 130 executes processing of switching a wireless link to be used for data exchange among the comprehensively established wireless links in response to a partial re-setup request from the terminal 30.

In addition, the management unit 130 stores multi-AP management information 131 and terminal management information 132. The multi-AP management information 131 stores information regarding access points (that is, the sharing AP 10 and the shared APs 20-1 and 20-2) used for multi-AP connection. The information regarding the access points used for multi-AP connection specifically includes, for example, an identifier, a frequency band, capability information, and operation parameters.

The identifier is, for example, an identifier of the sharing AP 10 and each of the affiliated APs of each of the shared APs 20. A MAC address can be used as the identifier.

The frequency band includes information indicating a frequency band used by the sharing AP 10 and each affiliated AP of each shared AP 20. As the frequency band, for example, a 2.4 GHz band, a 5 GHz band, a 6 GHz band, a 45 GHz band, a 60 GHz band, or the like can be applied. Each frequency band may include a plurality of channels. In this case, the multi-AP management information 131 may include information of the channels instead of or in addition to the information of the frequency band. Here, at the time of communication with the terminal 30 in the EMLSR mode, different channels in the same frequency band may be used for each wireless link.

The capability information includes, for example, information indicating whether or not the multi-AP connection method is supported. In the example of the embodiment, any capability information of the sharing AP 10, the shared AP 20-1, and the shared AP 20-2 is information indicating that the multi-AP connection method is supported.

The operation parameters include, for example, CWmin, CWmax, an arbitration interframe space (AIFS), and a transmission opportunity (TXOP) Limit. CWmin and CWmax indicate a minimum value and a maximum value of a contention window, respectively. The contention window is a parameter used to calculate backoff that is a transmission wait time for collision avoidance. AIFS is a fixed transmission wait time set for each traffic access category. The access category of the traffic includes, for example, "voice (VO)", "video (VI)", "best effort (BE)", "background (BK)", and "low latency (LL)". TXOP Limit indicates an upper limit value of a channel occupancy period TXOP.

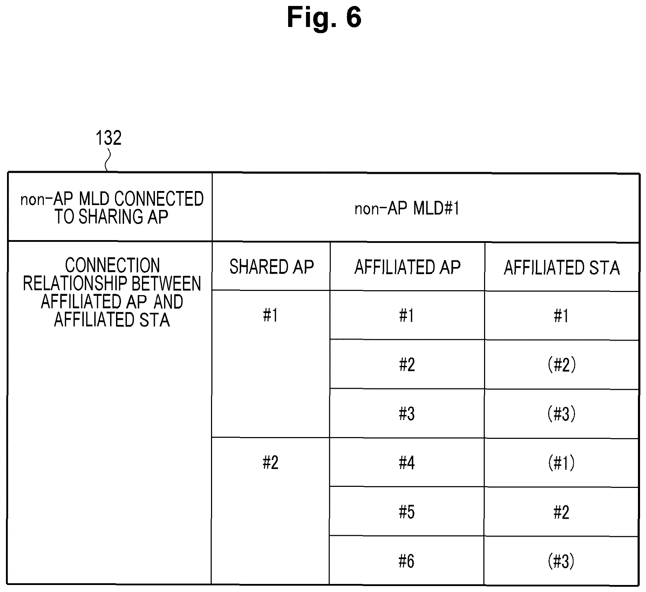

Fig. 6 is a table illustrating an example of a data structure of the terminal management information stored in the sharing AP according to the embodiment. As illustrated in Fig. 6, the terminal management information 132 includes information of an identifier of the non-AP MLD of the terminal 30 to which the AP MLD of the sharing AP 10 is connected, and information indicating a connection relationship between each of the affiliated APs of each of the shared APs belonging to the sharing AP 10 and the affiliated STA of the terminal 30. As described above, a plurality of identifiers associated with the respective RF units included in the terminal 30 is allocated to the affiliated STA. The information indicating the connection relationship between the affiliated AP and the affiliated STA can also be said to be information indicating which RF unit of the terminal 30 is used to connect the affiliated AP of the corresponding identifier to the affiliated STA. Here, the parentheses of the affiliated STA in Fig. 6 indicate that the wireless link between the affiliated AP of the corresponding identification number and the affiliated STA is established, but is not designated as the wireless link to be used for data exchange. That is, Fig. 6 illustrates that a wireless link using the affiliated AP #1 and the affiliated STA #1 and a wireless link using the affiliated AP #5 and the affiliated STA #2 are designated as wireless links used for data exchange.

In the example of Fig. 6, when the data of the terminal 30 in the EMLSR mode is received, data transmitted from the shared AP 20-1 using the wireless link via the affiliated AP #1 and the affiliated STA #1 and data transmitted from the shared AP 20-2 using the wireless link via the affiliated AP #5 and the affiliated STA #2 can be simultaneously received by the terminal 30. On the other hand, at the time of data transmission from the terminal 30 in the EMLSR mode, either the wireless link via the affiliated AP #1 and the affiliated STA #1 or the wireless link via the affiliated AP #5 and the affiliated STA #2 can be selected and data can be transmitted.

The functional configuration of the sharing AP 10 will be described with reference to Fig. 5 again. In a case where data is input from the data processing unit 120 or the management unit 130, the MAC frame processing unit 140 generates a MAC frame by adding a MAC header to the input data. Then, the MAC frame processing unit 140 inputs the MAC frame to any one of the wireless signal processing units 150, 160, and 170. Specifically, in a case where the MAC frame is a data frame, the MAC frame processing unit 140 inputs the MAC frame to the wireless signal processing units 150 and 160. In a case where the MAC frame is a beacon frame, the MAC frame processing unit 140 inputs the MAC frame to the wireless signal processing unit 170. Further, in a case where the MAC frame is input from the wireless signal processing units 150, 160, and 170, the MAC frame processing unit 140 extracts data from the MAC frame, and inputs the data extracted according to the type of the MAC frame to the data processing unit 120 or the management unit 130. Specifically, when the MAC frame is a data frame, the MAC frame processing unit 140 inputs the data to the data processing unit 120. When the MAC frame is a management frame or a control frame, the MAC frame processing unit 140 inputs data to the management unit 130.

Each of the wireless signal processing units 150, 160, and 170 adds a preamble and the like to the MAC frame input from the MAC frame processing unit 140 to generate a wireless frame. Each of the wireless signal processing units 150, 160, and 170 converts the generated wireless frame into a wireless signal. Then, each of the wireless signal processing units 150, 160, and 170 radiates (transmits) the converted wireless signal via the antennas 191, 192, and 193. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the wireless signal processing units 150, 160, and 170 converts the wireless signal from the corresponding shared AP 20 received via the antenna 191, 192, and 193 into the wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units 150, 160, and 170 extracts the MAC frame from the converted wireless frame. Then, each of the wireless signal processing units 150, 160, and 170 inputs the extracted MAC frame to the MAC frame processing unit 140. Here, in the embodiment, the wireless signal processing units 150, 160, and 170 are configured to transmit and receive wireless signals using frequency bands or channels different from one another. For example, the wireless signal processing unit 150 is used to individually transmit a wireless signal to one wireless signal processing unit of the shared AP 20-1. In addition, the wireless signal processing unit 160 is used to individually transmit a wireless signal to one wireless signal processing unit of the shared AP 20-2. Further, for example, the wireless signal processing unit 170 is used to transmit the wireless signals including the same information to the plurality of shared APs. The function of the wireless signal processing unit 170 may be implemented by any of the wireless signal processing units 150 and 160. The wireless signal processing unit 170 may be used to transmit a wireless signal including the same information to a plurality of RF units of the terminal 30.

Prior to start of the multi-AP connection, the management unit 130 transmits a wireless signal including management information generated on the basis of the multi-AP management information 131 to the shared APs 20-1 and 20-2 belonging to the sharing AP 10 using the wireless signal processing unit 170. In addition, at the time of the association processing, the management unit 130 transmits an association notification based on the multi-AP management information 131 and the terminal management information 132 to the shared APs 20-1 and 20-2 belonging to the sharing AP 10 using the wireless signal processing units 150 and 160.

After the multi-AP connection, the MAC frame processing unit 140 distributes the MAC frame to either of the shared APs 20-1 and 20-2 belonging to the sharing AP 10. For example, the MAC frame processing unit 140 uses the wireless signal processing unit to transmit the wireless signal to the shared AP 20 wirelessly connected to the terminal 30 among the shared APs 20-1 and 20-2 belonging to the sharing AP 10. The MAC frame processing unit 140 may determine the shared AP 20 as a transmission destination of the wireless signal according to a traffic identifier (TID) associated with the access category. Further, at the time of the partial re-setup processing, the MAC frame processing unit 140 uses the wireless signal processing unit to transmit information used for control of the partial re-setup processing to the shared APs 10 -1 and 20-2 belonging to the sharing APs 20.

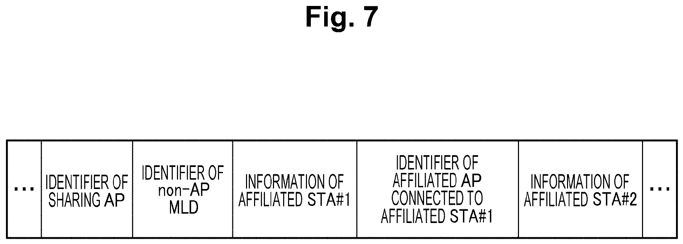

Fig. 7 is a diagram illustrating an example of the association notification generated in the sharing AP 10. The transmission of the association notification may be performed by broadcast or multicast. As illustrated in Fig. 7, the association notification of the example includes an identifier of a sharing AP, an identifier of a non-AP MLD, information of each affiliated STA, and an identifier of an affiliated AP of a shared AP that connects to each affiliated STA.

The identifier of the sharing AP is an identifier of the sharing AP managed in the multi-AP management information 131.

The identifier of the non-AP MLD is an identifier of the non-AP MLD of the terminal 30 whose wireless link has been established with the shared AP of the corresponding identifier.

The information of the affiliated STA is information of the affiliated STAs #1 and #2 subordinate to the corresponding non-AP MLD. The information of the affiliated STA includes an identifier, a frequency band, capability information, and operation parameters managed in the multi-AP management information 131.

The identifier of the affiliated AP connected to each of the affiliated STAs is information of a connection relationship between each of the affiliated STAs and the affiliated AP managed in the terminal management information 132. The identifiers of the affiliated APs connected to the respective affiliated STAs may include information of whether the corresponding wireless links are designated as links to be used for data exchange.

### 1.1.3.2 Functional Configuration of Shared AP

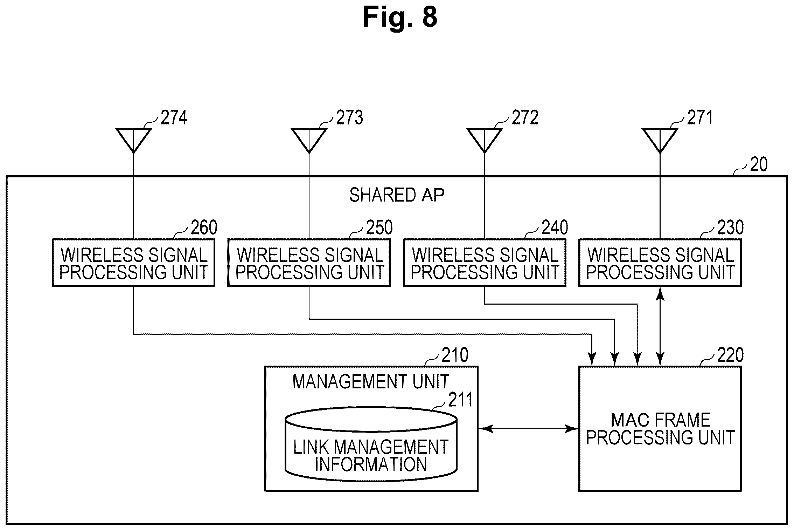

Fig. 8 is a block diagram illustrating an example of a functional configuration of the shared AP according to the embodiment. The shared AP 20 includes a management unit 210, a MAC frame processing unit 220, wireless signal processing units 230, 240, 250, and 260, and antennas 271, 272, 273, and 274. The management unit 210 and the MAC frame processing unit 220 are functional blocks that execute processing corresponding to the MAC sublayer of the second layer. The wireless signal processing units 230, 240, 250, and 260 are functional blocks that execute processing corresponding to the first layer. Here, the management unit 210 and the MAC frame processing unit 220 correspond to the AP MLD of the shared AP 20. On the other hand, the wireless signal processing units 230, 240, 250, and 260 correspond to the affiliated APs of the shared AP 20.

Prior to the multi-AP connection, the management unit 210 generates a beacon frame including information regarding the multi-AP connection on the basis of the management information received from the sharing AP. The management unit 210 informs the terminal 30 of the generated beacon frame via the wireless signal processing unit 260.

Further, the management unit 210 manages the state of the physical wireless connection between each of the affiliated APs of the shared AP 20 and the affiliated STA of the terminal 30 in the multi-AP connection. The management unit 210 stores link management information 211 as management information regarding physical wireless connection. Further, the management unit 210 may further store the multi-AP management information 131 transmitted from the sharing AP 10.

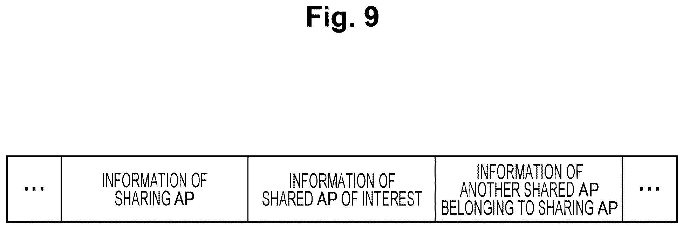

Fig. 9 is a diagram illustrating an example of the beacon frame generated in the shared AP 20. As illustrated in Fig. 9, the beacon frame of the example includes information of a sharing AP, information of a shared AP of an own station, and information of a shared AP of another station belonging to the sharing AP. The transmission of the beacon frame may be performed by broadcast or multicast.

The information of the sharing AP is information of the sharing AP to which the corresponding shared AP 20 belongs. The information of the sharing AP includes the identifier of the sharing AP. The identifier of the sharing AP may include the MAC address of the sharing AP.

The information of the shared AP of the own station includes the identifier, the frequency band, the capability information, and the operation parameters of the local station. The identifier of the shared AP of the own station may include the MAC address of the shared AP of the local station.

The information of the shared AP of the other includes an identifier, a frequency band, capability information, and an operation parameter of each of the shared APs of the other stations belonging to the sharing AP to which the own station belongs. The identifier of the shared AP of another station may include the MAC address of the shared AP of the another station.

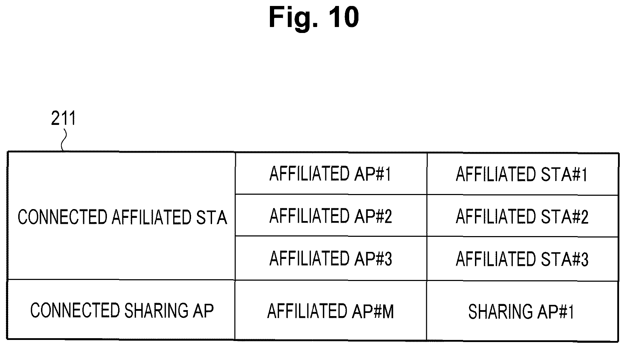

Fig. 10 is a table illustrating an example of a data structure of link management information stored in the shared AP according to the embodiment. Note that Fig. 10 illustrates link management information in the shared AP 20-1. As illustrated in Fig. 10, the link management information 211 includes information of the identifier of the affiliated STA of the terminal 30 connected to each affiliated AP of the own station. The identifier may be a MAC address. In addition, the link management information 211 includes information of the identifier of the sharing AP 10 to which its own station is connected. Here, the affiliated AP #M in Fig. 10 is an identifier of an affiliated AP used for connection with the sharing AP 10. For example, the identifier of the affiliated AP #M is allocated to the affiliated AP included in the wireless signal processing unit 260.

The functional configuration of the shared AP 20 will be described with reference to Fig. 8 again. The MAC frame processing unit 220 extracts the MAC frame from the wireless signal received from the sharing AP 10 via the wireless signal processing unit 240, and inputs the extracted MAC frame to the wireless signal processing unit 230. Further, the MAC frame processing unit 220 extracts the MAC frame from the wireless signal received from the terminal 30 via the wireless signal processing unit 230, and inputs the extracted MAC frame to the wireless signal processing unit 240.

Each of the wireless signal processing units 230, 240, 250, and 260 adds a preamble and the like to the MAC frame input from the MAC frame processing unit 220 to generate a wireless frame. Each of the wireless signal processing units 230, 240, 250, and 260 converts the generated wireless frame into a wireless signal. Then, each of the wireless signal processing units 230, 240, 250, and 260 radiates (transmits) the converted wireless signal via the antennas 271, 272, 273, and 274. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the wireless signal processing units 230, 240, 250, and 260 converts a wireless signal received via the antennas 271, 272, 273, and 274 into a wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units 230, 240, 250, and 260 extracts the MAC frame from the converted wireless frame. Then, each of the wireless signal processing units 230, 240, 250, and 260 inputs the extracted MAC frame to the MAC frame processing unit 220. Here, in the embodiment, the wireless signal processing units 230, 240, and 250 are configured to transmit and receive wireless signals using different channels of the same frequency band. The wireless signal processing units 230, 240, and 250 correspond to the affiliated APs 1, 2, and 3 or the affiliated APs 4, 5, and 6, respectively, and can be logically connected to the affiliated STAs of different identifiers of the terminal 30. Further, the wireless signal processing unit 260 is configured to transmit and receive the wireless signal using the same frequency band or channel as the wireless signal processing unit 170 of the sharing AP 10. For example, the wireless signal processing units 230, 240, and 250 are used to exchange the data frame with the terminal 30. Further, for example, the wireless signal processing unit 260 is used to receive a broadcast or multicast signal from the sharing AP 10 and a broadcast or multicast signal to the terminal 30. The functions of the wireless signal processing units 230, 240, and 250 and the function of the wireless signal processing unit 260 may be implemented in one wireless signal processing unit.

### 1.1.3.3 Functional Configuration of Terminal

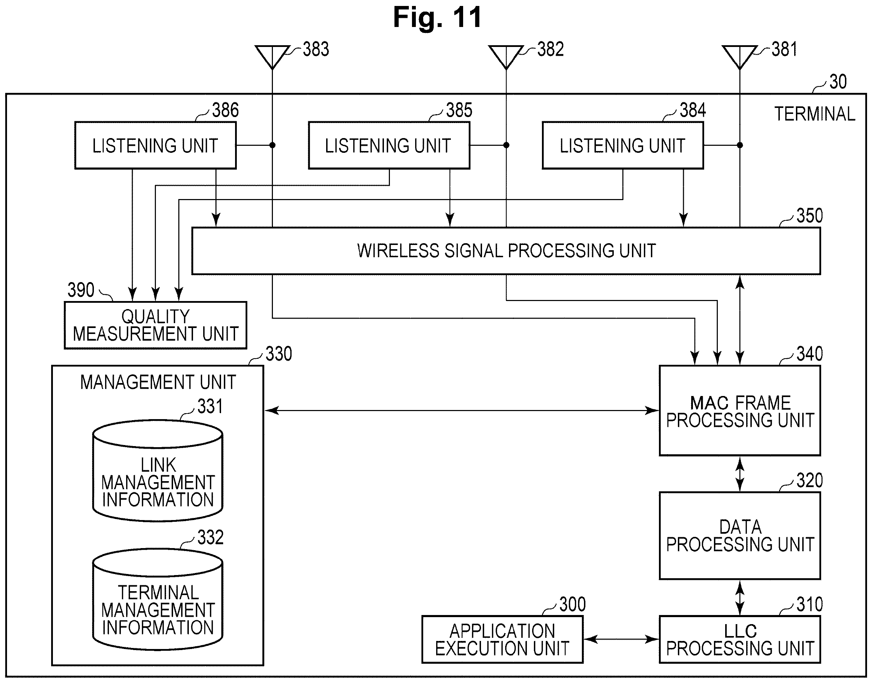

Fig. 11 is a block diagram illustrating an example of a functional configuration of the terminal according to the embodiment. The terminal 30 includes an application execution unit 300, an LLC processing unit 310, a data processing unit 320, a management unit 330, a MAC frame processing unit 340, a wireless signal processing unit 350, antennas 381, 382, and 383, listening units 384, 385, and 386, and a quality measurement unit 390. The application execution unit 300 is a functional block that executes processing corresponding to the seventh layer. The LLC processing unit 310 is a functional block that executes processing corresponding to the LLC sublayer of the second layer and the third layer to the sixth layer. The data processing unit 320 and the management unit 330 are functional blocks that execute processing corresponding to the MAC upper layer that is a part of the MAC sublayer of the second layer. The MAC frame processing unit 340, the wireless signal processing unit 350, and the quality measurement unit 390 are functional blocks that execute processing corresponding to the lower order of the MAC, which is a part of the MAC sublayer of the second layer, and processing corresponding to the first layer. Here, the data processing unit 320 and the management unit 330 correspond to the non-AP MLD of the terminal 30. On the other hand, the MAC frame processing unit 340, the wireless signal processing unit 350, and the quality measurement unit 390 correspond to an affiliated STA of the terminal 30.

The application execution unit 300 executes an application on the basis of data input from the LLC processing unit 310. In addition, the application execution unit 300 inputs data to the LLC processing unit 310. For example, the application execution unit 300 can display application information of the display 36. Further, the application execution unit 300 can operate on the basis of operation of an input interface.

The LLC processing unit 310 adds a DSAP header, an SSAP header, and the like to the data input from the application execution unit 300 to generate an LLC packet. Then, the LLC processing unit 310 inputs the generated LLC packet to the data processing unit 320. In addition, the LLC processing unit 310 extracts data from the LLC packet input from the data processing unit 320. Then, the LLC processing unit 310 inputs the extracted data to the application execution unit 300.

The data processing unit 320 performs preparation processing for generating a MAC frame such as aggregation on the LLC packet input from the LLC processing unit 310. Then, the data processing unit 320 inputs the processed data to the MAC frame processing unit 340. In addition, the data processing unit 320 extracts the LLC packet by performing deaggregation or the like on the data input from the MAC frame processing unit 340. Then, the data processing unit 320 inputs the extracted LLC packet to the LLC processing unit 310.

The management unit 330 controls logical wireless connection between the AP MLD of the sharing AP 10 and the non-AP MLD of the terminal 30 in the multi-AP connection. For example, the management unit 330 generates the association request on the basis of the multi-AP management information included in the beacon frame from the shared AP 20. In addition, the management unit 330 generates a partial re-setup request on the basis of a measurement result of quality of the wireless link by the quality measurement unit 390 so that instantaneous interruption does not occur in the physical wireless connection between the sharing AP 10 and the terminal 30 in the multi-AP connection. The partial re-setup is a request used when a part of a multi-AP link set used for communication is switched to another wireless link of the multi-AP link set in a case where the multi-AP link set based on the multi-AP function is established between the AP MLD of the sharing AP 10 and the non-AP MLD of the terminal 30. For example, when deterioration in communication quality is detected in some wireless links, a partial re-setup request is generated. Further, the management unit 330 stores link management information 331 and terminal management information 332.

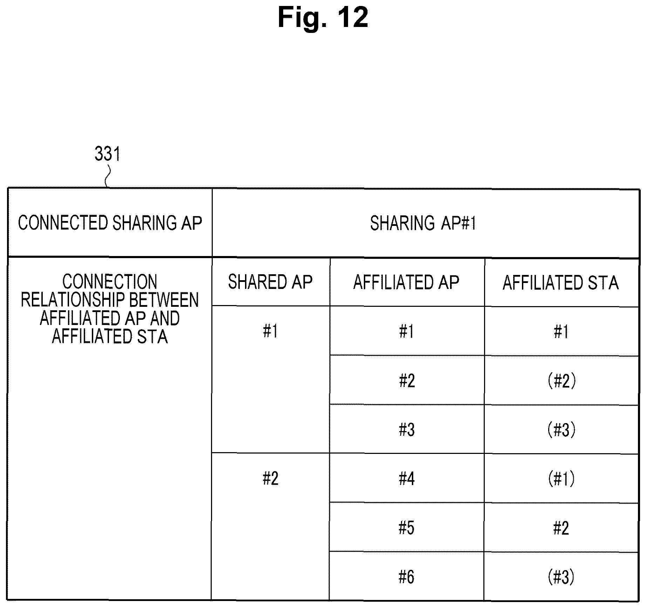

Fig. 12 is a table illustrating an example of a data structure of the link management information stored in the terminal according to the embodiment. As illustrated in Fig. 12, the link management information 331 is information equivalent to the terminal management information 132 illustrated in Fig. 6. That is, the link management information 331 includes information of the identifier of the AP MLD of the sharing AP 10 to which the non-AP MLD of the terminal 30 is connected, and information indicating the connection relationship between the affiliated AP of each of the shared APs belonging to the sharing AP 10 and the affiliated STA of the terminal 30.

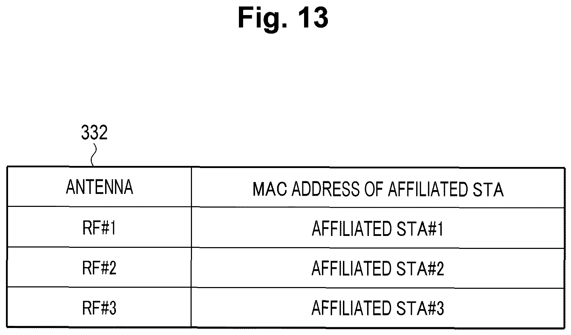

Fig. 13 is a table illustrating an example of a data structure of the terminal management information stored in the terminal according to the embodiment. As illustrated in Fig. 13, the terminal management information 332 manages an identifier allocated to an affiliated STA included in the wireless signal processing unit 350. The identifier of the affiliated STA may be, for example, a MAC address, and is associated with the identifier of the RF unit. In Fig. 13, RF#1 is an identifier of the antenna 381 as the RF unit, RF#2 is an identifier of the antenna 382 as the RF unit, and RF#3 is an identifier of the antenna 383 as the RF unit.

The functional configuration of the terminal 30 will be described with reference to Fig. 11 again. When data is input from data processing unit 320, the MAC frame processing unit 340 adds a MAC header to the input data to generate a MAC frame. Then, the MAC frame processing unit 340 outputs the MAC frame to the wireless signal processing unit 350. At this time, the MAC frame processing unit 340 switches the identifier of the affiliated STA as the wireless signal processing unit 350 according to the antenna that has received the initial control frame from the shared AP 20 prior to transmission of the wireless signal, and gives the switched identifier to the MAC header of the MAC frame. When there is no reception of the initial control frame prior to transmission of the wireless signal, the MAC frame processing unit 340 selects an identifier of an affiliated STA corresponding to an antenna to be used for transmission and attaches the selected identifier to the MAC header of the MAC frame. Further, the MAC frame processing unit 340 inputs the MAC frames input from the wireless signal processing unit 350 to the data processing unit 320.

The wireless signal processing unit 350 adds a preamble and the like to the MAC frame input from the MAC frame processing unit 340 to generate a wireless frame. The wireless signal processing unit 350 converts the generated wireless frame into a wireless signal. Then, the wireless signal processing unit 350 radiates (transmits) the converted wireless signal via any one of the antennas 381, 382, and 383. When the initial control frame is received in advance, the wireless signal processing unit 350 radiates a wireless signal from the antenna that has received the initial control frame. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, the wireless signal processing unit 350 converts a wireless signal from the corresponding shared AP 20 received via any one of the antennas 381, 382, and 383 or simultaneously into a wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. The wireless signal processing unit 350 extracts the MAC frame from the converted wireless frame. Then, the wireless signal processing unit 350 inputs the extracted MAC frame to the MAC frame processing unit 340.

The listening unit 384 is connected to the antenna 381, and inputs the received initial control frame to the wireless signal processing unit 350 when the initial control frame is received from the shared AP 20 via the antenna 381. When the initial control frame is not received, a wireless signal received via the antenna 381 is input to the quality measurement unit 390. The listening unit 385 is connected to the antenna 382, and inputs the received initial control frame to the wireless signal processing unit 350 when the initial control frame is received from the shared AP 20 via the antenna 382. When the initial control frame is not received, a wireless signal received via the antenna 382 is input to the quality measurement unit 390. The listening unit 386 is connected to the antenna 383, and inputs the received initial control frame to the wireless signal processing unit 350 when the initial control frame is received from the shared AP 20 via the antenna 383. When the initial control frame is not received, a wireless signal received via the antenna 383 is input to the quality measurement unit 390.

The quality measurement unit 390 measures the quality of each wireless link to which the wireless signal processing unit 350 is connected. The quality of the wireless link is evaluated, for example, by measuring received power or the like based on a wireless signal input from the listening units 384, 385, and 386. The quality measurement unit 390 inputs the quality measurement result to the management unit 330.

### 1.2 Operation

### 1.2.1 Communication Sequence

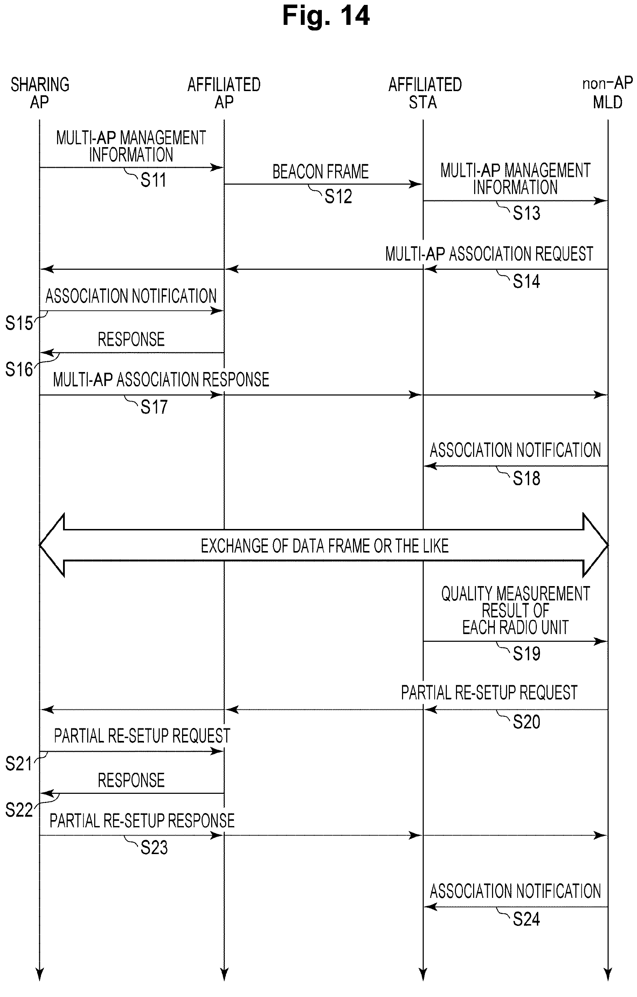

Next, an operation in the communication system according to the embodiment will be described. Fig. 14 is a sequence diagram illustrating an example of processing of communication based on the multi-AP connection in the communication system according to the embodiment.

Fig. 14 illustrates a flow of information exchanged among a sharing AP, an affiliated AP, an affiliated STA, and a non-AP MLD.

The sharing AP #1 transmits the multi-AP management information 131 to each shared AP in a broadcast or multicast manner (S11). Since the shared APs #1 and #2 are installed in the communicable area of the sharing AP #1, the shared APs #1 and #2 can receive the multi-AP management information 131 transmitted by broadcast or multicast.

Each of the affiliated APs of the shared APs #1 and #2 generates a beacon frame on the basis of the received multi-AP management information 131. Then, each of the affiliated APs transmits the generated beacon frame in broadcast or multicast (S12). The terminal can receive the beacon frame if the terminal is located in any of the communicable areas of the shared APs #1 and #2. Here, the beacon frame does not necessarily need to be transmitted from all the affiliated APs. The beacon frame may be transmitted from one affiliated AP of the shared AP #1 and may be transmitted from one affiliated AP of the shared AP #2.

The affiliated STA of the terminal that has received the beacon frame through at least one of the antennas 381, 382, and 383 inputs the information included in the beacon frame to the non-AP MLD (S13).

The non-AP MLD generates a multi-AP association request for performing multi-AP connection on the basis of the input information, and transmits the generated multi-AP association request to the sharing AP via the affiliated STA and at least one affiliated AP of the shared APs #1 and #2 (S14). The multi-AP association request may be emitted from each of the antennas 381, 382, and 383. The association request includes information of each identifier allocated to the affiliated STA and information of the identifier of the affiliated AP to which the terminal 30 desires to connect. The multi-AP association request transmitted from the affiliated STA is transmitted to the sharing AP via the shared AP to which the frequency band or the channel corresponds.

The sharing AP generates the association notification on the basis of the association request.
Then, the sharing AP transmits the generated association notification to each of the shared APs #1 and #2 by broadcast or multicast (S15). The association notification includes identifiers of all affiliated STAs subordinate to the non-MLD to establish a wireless link.

When the association notification includes the identifier of any of the affiliated APs included therein, the shared APs #1 and #2 associate the identifiers of the affiliated STAs #1, #2, and #3 as the peer of the wireless link in the terminal 30 with the identifier of the affiliated AP, and register the associated identifiers as the link management information 211. Further, the shared APs #1 and #2 register a frequency band, capability information, operation parameters, and the like as information of the affiliated STA. Thereafter, the shared APs #1 and #2 return a response for notifying the sharing APs that the association notification has been received (S16). In this way, a comprehensive wireless link with the terminal 30 is formed in the shared AP.

In addition, the sharing AP generates the association response to the association request from the non-AP MLD. Then, the sharing AP 10 transmits the generated association response to the non-AP MLD (S17). The association response is transmitted to the non-AP MLD via at least one affiliated AP of the shared APs #1 and #2 and the affiliated STA.

The non-AP MLD associates an identifier of an affiliated AP as a connection partner in each wireless link with the identifier of the affiliated STA on the basis of the association response, and registers the identifier as the link management information 331. Thereafter, the non-AP MLD generates the association notification. Then, the non-AP MLD inputs the generated association notification to the affiliated STA (S18). The association notification includes an identifier of an affiliated AP that is a connection destination of the affiliated STA of each identifier. With the association notification to the affiliated STA, preparation in the terminal for data exchange is completed.

As described above, association processing for establishing a wireless link by multi-AP connection between the AP MLD of a sharing AP and the non-AP MLD of a terminal is completed. After the association processing is completed, for example, a wireless link via the affiliated AP #1 and the affiliated STA #1, a wireless link via the affiliated AP #2 and the affiliated STA #2, a wireless link via the affiliated AP #3 and the affiliated STA #3, a wireless link via the affiliated AP #4 and the affiliated STA #1, a wireless link via the affiliated AP #5 and the affiliated STA #2, and a wireless link via the affiliated AP #6 and the affiliated STA #3 are established between the AP MLD of the sharing AP and the non-AP MLD of the terminal.

The data transmission from the sharing AP #1 is performed using the wireless link designated by the initial control frame transmitted from the shared AP #1 and/or #2. On the other hand, one of the valid wireless links is used for transmission of data from the terminal. When a wireless signal addressed to the own station is received, the shared AP transfers the received wireless signal to the sharing AP. On the other hand, the sharing AP may, for example, duplicate data and distribute and transmit the duplicated data to a plurality of shared APs. In this case, the terminal may receive data from multiple antennas simultaneously. That is, in the embodiment, joint transmission using a plurality of sharing APs may also be performed. Here, in a case where the same data is transmitted from a plurality of shared APs, the sharing AP 10 notifies the affiliated STA of which wireless link is used to transmit the data using an action frame or the like. Then, the affiliated STA of the terminal 30 enables the plurality of notified antennas. Thus, simultaneous data reception from a plurality of shared APs using a plurality of antennas can be implemented.

After the wireless link is established, a wireless signal received from each antenna is input from the listening unit to the quality measurement unit. The quality measurement unit inputs a quality measurement result (for example, received power) of the wireless signal received from each antenna to the non-AP MLD as a quality measurement result of the wireless link to which each of the affiliated STAs #1, #2, and #3 is connected (S19).

The non-AP MLD performs determination processing for determining whether or not partial re-setup is necessary on the basis of the quality measurement result for each of the subordinate affiliated STAs #1, #2, and #3, and transmits a partial re-setup request to the sharing AP as necessary (S20). Details of the determination processing will be described below. The partial re-setup request includes, for example, an identifier of an affiliated STA for which partial re-setup is desired and an identifier of an affiliated AP to which the affiliated STA for which partial re-setup is desired newly desires connection. The partial re-setup request is transmitted to the sharing AP using one valid wireless link.

The sharing AP generates a partial re-setup request for each shared AP based on the partial re-setup request from the non-AP MLD. Then, the sharing AP transmits the generated partial re-setup request to each of the shared APs #1 and #2 by broadcast or multicast (S21). The partial re-setup request includes an identifier of an affiliated STA that desires to switch a connection destination, an identifier of an affiliated AP that is a switching source of the affiliated STA, and an identifier of an affiliated AP that is a switching destination of the affiliated STA.

Upon receiving the partial re-setup request, the shared APs #1 and #2 update the link management information 211 and return a response indicating that the switching of the connection destination can be accepted when the identifier of their own affiliated AP is included in the switching source or the switching destination and the connection destination can be switched (S22). On the other hand, when the connection destination switching is not possible, the shared APs #1 and #2 return a response indicating that the connection destination switching is not acceptable.

Upon receiving the response from the shared APs #1 and #2, the sharing AP generates a partial re-setup response to a partial re-setup request from the non-AP MLD. Then, the sharing AP 10 transmits the generated partial re-setup response to the non-AP MLD (S23). The partial re-setup response is transmitted to the non-AP MLD via the affiliated AP of at least one of the shared APs #1 and #2 and the affiliated STA.

The non-AP MLD generates an association notification on the basis of the partial re-setup response. Then, the non-AP MLD inputs the generated association notification to the affiliated STA (S24). The association notification includes the identifier of the switching source affiliated STA and the identifier of the switching destination affiliated AP. With the association notification to the affiliated STA, preparation in the terminal for data exchange using the wireless link of the switching destination is completed.

Thus, the partial re-setup processing is completed. That is, in the embodiment, the partial re-setup processing can be performed without direct exchange in the wireless section between the shared AP and the terminal 30.

Note that, in the partial re-setup processing described above, the sharing AP 10 may include information indicating a timing to switch the wireless link in the partial re-setup request and the partial re-setup response. The timing of switching the wireless link can be defined by, for example, the number of times of transmission of the beacon frame after notification of the partial re-setup request and the partial reset response, the elapsed time, and the like. Thus, the switching timings of the affiliated APs and the affiliated STAs can be aligned by the countdown method.

### 1.2.2 Determination Processing

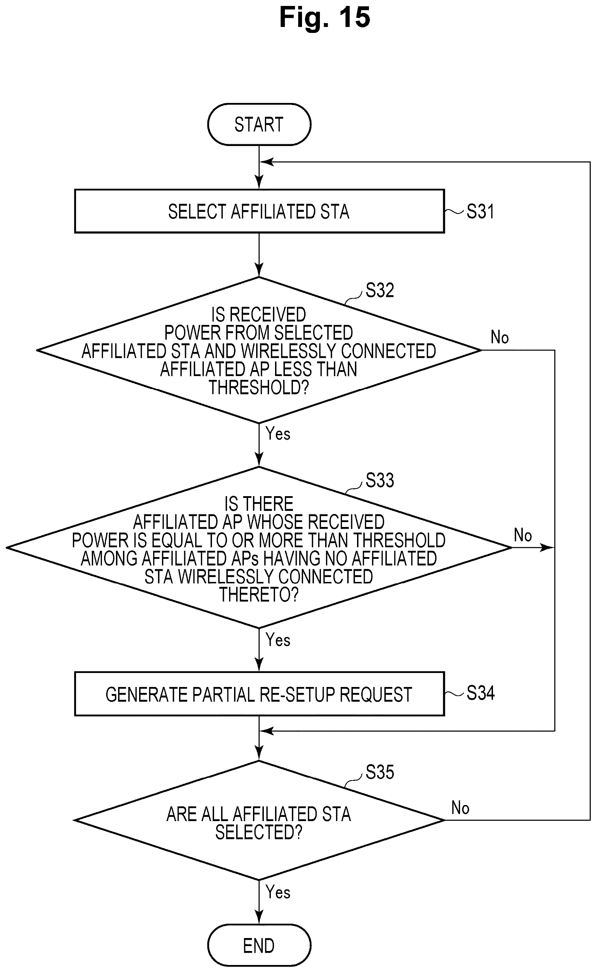

Fig. 15 is a flowchart illustrating an example of the determination processing subsequent to the association processing. Fig. 15 illustrates a case where the received power is measured as an example of the quality measurement result.

When the measurement result of the received power of the wireless signal received for each of the affiliated STAs #1, #2, and #3 is input (start), the non-AP MLD selects the identifier of the affiliated STA to be subjected to the determination processing (S31).

The non-AP MLD determines whether or not the received power from the affiliated AP to which the affiliated STA of the selected identifier is connected is less than a threshold (S32).

When the received power from the affiliated AP connected thereto is less than the threshold (S32; yes), the non-AP MLD determines whether or not there is an affiliated AP whose received power is equal to or more than the threshold among the affiliated APs having no affiliated STA connected thereto (S33).

A case where there is an affiliated AP whose received power is equal to or more than the threshold among the affiliated APs having no affiliated STA connected thereto (S33; yes), the non-AP MLD generates a partial re-setup request (S34). As described above, the partial re-setup request includes the identifier of the affiliated STA for which switching of connection is desired, the identifier of the affiliated AP of the switching source, and the identifier of the affiliated AP of the switching destination. The identifier of the affiliated STA for which switching of connection is desired is the identifier of the affiliated STA selected in the processing of S31. The identifier of the affiliated AP of the switching destination is the identifier of the affiliated AP included in the wireless link for which the received power is determined to be equal to or more than the threshold in the processing of S33.

After the processing of S34, in a case where the received power from the affiliated AP connected thereto is equal to or more than the threshold (S32; no), or when the received power from an affiliated AP that is not connected is less than the threshold (S33; no), the non-AP MLD determines whether or not all the affiliated STAs have been selected (S35).

In a case where there is an unselected affiliated STA (S35; no), the non-AP MLD selects the unselected affiliated STA (S31). Thereafter, the subsequent processing of S32 to S35 is executed. In this manner, the processing of S31 to S35 is executed until all the affiliated STAs are selected.

In a case where all the affiliated STAs have been selected (S35; yes), the determination processing ends (end) .

### 1.3 Effects According to Embodiment

A plurality of identifiers associated with identifiers of a plurality of RF units is allocated to an affiliated STA of the terminal 30 in the EMLSR mode. Thus, an affiliated STA can be designated in a unit including an RF unit as a connection destination of the affiliated AP. Further, the affiliated STA performs MAC frame generation and the like by switching the plurality of identifiers in accordance with the affiliated AP that transmits and receives data and the like. Therefore, by signaling between the AP MLD of the sharing access point and the non-AP MLD of the terminal, establishment of a wireless link and switching of a wireless link between each affiliated AP of the shared AP and an affiliated STA using each RF unit of the terminal can be performed.

Further, at the time of establishing a wireless link, comprehensive wireless links between the affiliated APs and the affiliated STA is established. Each affiliated STA selects a link to be used for transmission and reception of data and the like from the comprehensive wireless links, and switches some links by partial re-setup on the basis of the communication quality of each link. Thus, at the time of switching the wireless link, the non-AP MLD of the terminal can switch the wireless link without individually performing the reset-up procedure with the AP MLD of the shared AP and without disconnecting and reconnecting all the wireless links. Therefore, the occurrence of the instantaneous interruption can be suppressed, and the delay caused in the data exchange can be reduced.

### 2. Modifications and the like

Note that various modifications can be applied to the above-described embodiment. For example, in the above-described embodiment, the function of the sharing AP and the function of the shared AP are completely divided. Actually, the sharing AP may have the function of the shared AP. For example, the sharing AP 10 may be installed at the position of the shared AP 20-1 illustrated in Fig. 1. In this case, the sharing AP 10 at the position of the shared AP 20-1 can communicate with both the other shared APs and the terminal 30 using the wireless signal processing units 150, 160, and 170 while managing the multi-AP management information 131 and the terminal management information 132 in the management unit 130. The wireless signal processing unit used for data exchange with the terminal 30 may be managed so as not to be used for communication with another sharing AP. In addition, transmission of comprehensive wireless signals to another sharing AP such as the association notification may be performed using the wireless signal processing unit 180 in a similar manner as described above. Furthermore, in the embodiment, the sharing AP 10 may wirelessly communicate with the terminal 30 without passing through the shared APs 20-1 and 20-2.

Further, in the link management information 221 of Fig. 6, only some connection relationships among the connection relationships between the affiliated STA and the affiliated APs are registered. On the other hand, all combinations of connection relationships between the affiliated STA and the affiliated APs may be registered as the link management information 221. That is, in Fig. 6, an affiliated AP of one identifier is associated with an affiliated STA of one identifier. On the other hand, affiliated APs of a plurality of identifiers may be associated with an affiliated STA of one identifier. However, when actual data is transmitted and received, it is desirable that wireless links using the same radio unit are not simultaneously used for data transmission and reception.

Further, in the above-described embodiment, the number of shared APs included in each wireless link is one. In contrast, two or more shared APs may be included in each wireless link. That is, the multi-AP connection in the embodiment can also be applied to a multistage configuration in which two or more shared APs are interposed in the wireless link between the sharing AP and the terminal. In this case, two or more lower-level shared APs may be connected to the higher-level shared AP. The multistage configuration enables transmission of the multi-AP management information and the like to the shared AP installed outside the communicable area of the sharing AP.

Furthermore, the association processing and the partial re-setup processing in the sharing AP 10, the shared AP 20, and the terminal 30 according to the above-described embodiments can be stored as a program that can be executed by a processor that is a computer. Further, the program can be stored in a storage medium of an external storage device such as a magnetic disk, an optical disc, or a semiconductor memory for distribution. Then, the processor of each of the sharing AP 10, the shared APs 20, and the terminal 30 reads the program stored in the storage medium of the external storage device, and the operation is controlled by the read program, whereby the association processing and the partial re-setup processing can be executed.

Note that the present invention is not limited to the above embodiment, and various modifications can be made in the implementation stage without departing from the gist thereof. In addition, the embodiments may be implemented in appropriate combination, and in that case, a combined effect can be obtained. Furthermore, the above-described embodiments include various inventions, and various inventions can be extracted by a combination selected from a plurality of disclosed constituent elements. For example, even if some components are deleted from all the components shown in the embodiment, if the problem can be solved and the effect can be obtained, the configuration from which the components are deleted can be extracted as the invention.

### Reference Signs List

- 1: Communication system
- 10: Sharing Access Point (AP)
- 11: CPU
- 12: ROM
- 13: RAM
- 14: Wireless communication module
- 15: Radio (RF) unit
- 16: Wired communication module
- 20, 20-1, 20-2: Shared Access Point (AP)
- 21: CPU
- 22: ROM
- 23: RAM
- 24: Wireless communication module
- 25: Radio (RF) unit
- 30: Terminal
- 31: CPU
- 32: ROM
- 33: RAM
- 34: Wireless communication module
- 35: RF (radio) unit
- 36: Display
- 37: Storage
- 40: Network
- 110: LLC processing unit
- 120: Data processing unit
- 130: Management unit
- 131: Multi-AP management information
- 132: Terminal management information
- 140: MAC frame processing unit
- 150, 160, 170: Wireless signal processing unit
- 191, 192, 193: Antenna
- 210: Management unit
- 211: Link management information
- 220: MAC frame processing unit
- 221: Link management information
- 230, 240, 250, 260: Wireless signal processing unit
- 271, 272, 273, 274: Antenna
- 300: Application execution unit
- 310: LLC processing unit
- 320: Data processing unit
- 330: Management unit
- 331: Link management information
- 332: Terminal management information
- 340: MAC frame processing unit
- 350: Wireless signal processing unit
- 381, 382, 383: Antenna
- 384, 385, 386: Listening unit
- 390: Quality measurement unit

## Claims

1. A terminal apparatus in a communication system including a sharing access point, a plurality of shared access points that wirelessly communicate with the sharing access point, and a terminal apparatus, the terminal apparatus comprising:
a first wireless signal processing unit that processes a wireless signal for transmitting and receiving the wireless signal using each of a plurality of radio units; and
a management unit that manages a connection destination of the first wireless signal processing unit, wherein
the first wireless signal processing unit is allocated with a plurality of different first identifiers respectively corresponding to the plurality of radio units, and
the management unit switches the first identifier according to a second identifier allocated to a second wireless signal processing unit that transmits and receives the wireless signal to and from the first wireless signal processing unit among one or more second wireless signal processing units of each of the shared access points, and controls a connection destination of the radio unit.

2. The terminal apparatus according to claim 1,
wherein
the management unit updates the connection destination of the radio unit by updating only a part of association between the first identifier and the second identifier according to a response from the sharing access point based on a request to the sharing access point.

3. The terminal apparatus according to claim 1 or 2, wherein
each of the plurality of radio units includes an antenna and a listening unit, and
the management unit updates the connection destination of the radio unit on a basis of communication quality acquired through the listening unit.

4. A sharing access point in a communication system including a sharing access point, a plurality of shared access points that wirelessly communicate with the sharing access point, and a terminal apparatus including a first wireless signal processing unit that processes a wireless signal for transmitting and receiving the wireless signal using each of a plurality of radio units, the first wireless signal processing unit being allocated with a plurality of different first identifiers respectively corresponding to the plurality of radio units, the sharing access point comprising:
a management unit that
establishes a wireless link between each of second wireless signal processing units and the radio unit by associating the first identifiers with a second identifier allocated to one or more second wireless signal processing units of each of the shared access points on a basis of a request from the terminal apparatus, and
notifies the shared access point and the terminal apparatus of correspondence information between the first identifiers and the second identifier, wherein
the management unit updates the wireless link by updating only a part of association between the first identifiers and the second identifier on a basis of a request from the terminal apparatus.

5. A shared access point in a communication system including a sharing access point, a plurality of shared access points that wirelessly communicate with the sharing access point, and a terminal apparatus including a first wireless signal processing unit that processes a wireless signal for transmitting and receiving the wireless signal using each of a plurality of radio units, the first wireless signal processing unit being allocated with a plurality of different first identifiers respectively corresponding to the plurality of radio units, the shared access point comprising:
one or more second wireless signal processing units that perform signal processing of a wireless signal for transmitting and receiving the wireless signal to and from the first wireless signal processing unit; and
a management unit that establishes a wireless link between the second wireless signal processing unit and the radio unit by associating the first identifiers with a second identifier allocated to the second wireless signal processing unit on a basis of a notification from the sharing access point, wherein
the management unit updates the wireless link by updating only a part of association between the first identifiers and the second identifier on a basis of a request from the terminal apparatus.

6. A communication method in a communication system including a sharing access point, a plurality of shared access points that wirelessly communicate with the sharing access point, and a terminal apparatus including a first wireless signal processing unit that processes a wireless signal for transmitting and receiving the wireless signal using each of a plurality of radio units, the first wireless signal processing unit being allocated with a plurality of different first identifiers respectively corresponding to the plurality of radio units, the communication method comprising:
switching the first identifier according to a second identifier allocated to a second wireless signal processing unit that transmits and receives the wireless signal to and from the first wireless signal processing unit among one or more second wireless signal processing units of each of the shared access points, and
controlling a connection destination of the radio unit according to switching of the first identifier.
